# EUROPEAN PATENT SPECIFICATION

(11) **EP 1 612 630 B1**
(45) Date of publication and mention of the grant of the patent: **25.02.2015**
(21) Application number: 05013987.2
(22) Date of filing: 28.06.2005
(51) Int. Cl.: G05B 19/042

(54) **Extensible data transformation system**
Erweiterbares Datentransformationssystem
Système de transformation des données extensible

(30) Priority: 29.06.2004 US 880177
(43) Date of publication of application: 04.01.2006
(73) Proprietor: Rockwell Automation Technologies, Inc., Mayfield Heights, OH 44124 (US)
(72) Inventor: Callaghan, David M., Concord, OH 44077 (US)
(74) Representative: Grünecker, Kinkeldey, Stockmair & Schwanhäusser

(56) References cited:
- WO-A-03/105194
- DE-A1- 10 138 533
- DE-A1- 10 251 502
- US-A1- 2003 014 500
- WOLLSCHLAEGER M ET AL: "Web integration of factory communication systems using an XML framework" INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, vol. 1, 8 July 2002 (2002-07-08), pages 146-151, XP010598161 ISBN: 0-7803-7369-3

## Description

### TECHNICAL FIELD

The present invention relates generally to industrial control systems, and more particularly toward transformation of industrial device data format or protocol to facilitate device interoperability.

### BACKGROUND

Industrial controllers are special-purpose computers utilized for controlling industrial processes, manufacturing equipment, and other factory automation, such as data collection or networked systems. In accordance with a control program, the industrial controller, having an associated processor (or processors), measures one or more process variables or inputs reflecting the status of a controlled system, and changes outputs effecting control of such system. The inputs and outputs may be binary, (*e.g.*, on or off), as well as analog inputs and outputs assuming a continuous range of values.

Measured inputs received from such systems and the outputs transmitted by the systems generally pass through one or more input/output (I/O) modules. These I/O modules serve as an electrical interface to the controller and may be located proximate or remote from the controller including remote network interfaces to associated systems. Inputs and outputs may be recorded in an I/O table in processor memory, wherein input values may be asynchronously read from one or more input modules and output values written to the I/O table for subsequent communication to the control system by specialized communications circuitry (*e.g.*, back plane interface, communications module). Output modules may interface directly with one or more control elements, by receiving an output from the I/O table to control a device such as a motor, valve, solenoid, amplifier, and the like.

At the core of the industrial control system, is a logic processor such as a Programmable Logic Controller (PLC) or PC-based controller. Programmable Logic Controllers for instance, are programmed by systems designers to operate manufacturing processes *via* user-designed logic programs or user programs. The user programs are stored in memory and generally executed by the PLC in a sequential manner although instruction jumping, looping and interrupt routines, for example, are also common. Associated with the user program are a plurality of memory elements or variables that provide dynamics to PLC operations and programs. These variables can be user-defined and can be defined as bits, bytes, words, integers, floating point numbers, timers, counters and/or other data types to name but a few examples.

Interactions between industrial control system or automation devices are conventionally accomplished via custom code. Presently, there is a multitude of automation device vendors employing proprietary data formats or protocols. Moreover, automation devices from the same vendor or partner can often utilize differing data protocols. In view of such inconsistency, designers of automation devices must be aware and/or anticipate other devices and systems with which communications will occur to ensure that the device contains custom code to provide translations there between. Typically, custom code must be created on a device with two ports - one of type A the other of type B. The executable code on the device then maps protocol data from device type A to type B. Furthermore, the device can only be enhanced or extended to communicate with other devices at least by writing and loading devices with additional customized mapping codes.

Accordingly, there is a need in the art for an improved system and method of facilitating interoperability between industrial control system devices utilizing differing data formats or protocols.

Document DE 101 38 533 A1 relates to the conversion of project data and/or project planning data of an automation project into a standardized metadata language, particularly XML. Conversion of proprietary format into an XML format allows the data to be read, processed, etc. by disparate computer programs associated with the project.

Document WO 03/105 194 A1 is concerned with an integrated manufacturing system (eCenter) which allows collection, propagation, storage, distribution, and transformation of data to different parties associated with the eCenter. The eCenter acts as an intermediary between tools located at a fabricator (FAB) and the original equipment manufacturer (OEM), where the OEM is located remotely to the FAB. The eCenter generates proprietary data from the tool allowing for e-diagnostics of the tool by the FAB and the OEM. The data con be formatted in the form of XML to allow the data to be analyzed by disparate computer systems associated with the eCenter.

Document DE 102 51 502 A1 relates to a process control/process monitoring system where distance over which field devices can be connected is limited by such factors as data transmission distance, data transmission rates, operating environment, etc. A plurality of disparate field buses may be used to connect a variety of field devices across the system and a gateway device can be employed to connect the disparate buses together. The use of a field device (sensor) is disclosed in this document that incorporates two communications interfaces facilitating conversion of data from one field bus communication protocol to another.

Document US 2003/014500 discloses a transactional data communications system and method which communicates information within an enterprise having a process control system and a plurality of information technology systems that are communicatively coupled to the process control system via a web services interface and a transactional information server. The system and method generates transactional process control information and formats the transactional process control information based on an extensible markup language input schema to form formatted transactional process control information. The system and method sends the formatted transactional process control information to the transactional information server via the web services interface and maps the formatted transactional process control information to an extensible markup language output schema associated with one of the plurality of information technology systems to form mapped transactional process control information. The system and method then sends the mapped transactional process control information to the one of the plurality of information technology systems.

### SUMMARY OF THE INVENTION

It is the object of the present invention to provide a fast and versatile method and apparatus to facilitate communication and interaction amongst automation devices that employ disparate data protocols.

This object is solved by the subject matter of the independent claims.

Preferred embodiments are defined by the dependent claims.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to the more detailed description that is presented later.

Briefly described, the present invention concerns systems and methods to facilitate communication and interaction amongst automation devices that employ disparate data protocols. According to an aspect of the invention, a transformation gateway component can be employed. The transformation gateway component can be utilized as part of a separate service or device to provide a common interface for industrial control device communication. In particular, the transformation gateway can provide core data protocol transformations, for instance from type A to type B.

According to one aspect of the invention, the transformation gateway component can employ text based scripts that perform the transformation utilizing web based technologies such as XML (eXtensible Mark-up Language), XSL (eXtensible Stylesheet Language) and XSLT (eXtensible Stylesheet Language Transformation) as well as respective execution subsystems (*e.g*., XSLT processor). Thus, device data can be marked-up with appropriate XML metadata, and tools such as XSLT can be used to map an input domain to an expected output domain.

According to another aspect of the subject invention, the transformation gateway component can be employed as a network service. As a network service, the communication transformation can be scaled to meet requirements of a myriad of devices needing such a service.

According to yet another aspect of the invention, the transformation component can be employed on a separate device rather than as a network service. The device can then be employed to map data between different automation device vendors so that each device can utilize and understand the meaning of data values in their own respective local data formats.

To the accomplishment of the foregoing and related ends, certain illustrative aspects of the invention are described herein in connection with the following description and the annexed drawings. These aspects are indicative of various ways in which the invention may be practiced, all of which are intended to be covered by the present invention. Other advantages and novel features of the invention may become apparent from the following detailed description of the invention when considered in conjunction with the drawings.

### BRIEF DESCRIPTION OF THE DRAWINGS

The foregoing and other aspects of the invention will become apparent from the following detailed description and the appended drawings described in brief hereinafter.
Fig. 1 is a schematic block diagram of a data transformation system in accordance with an aspect of the subject invention.
Fig. 2 is a schematic block diagram of a transformation gateway component in accordance with an aspect of the present invention.
Fig. 3 is a schematic block diagram of a data transformation system in accordance with an aspect of the subject invention.
Fig. 4 is a schematic block diagram of a data transformation system in accordance with an aspect of the subject invention.
Fig. 5 is a schematic block diagram of a data transformation system in accordance with an aspect of the present invention.
Fig. 6 is a flow chart diagram of a data transformation methodology in accordance with an aspect of the subject invention.
Fig. 7 is a flow chart diagram of a method of transforming data in accordance with an aspect of the present invention.
Fig. 8 is a flow chart diagram of data transformation methodology in accordance with an aspect of the subject invention.

### DETAILED DESCRIPTION

The present invention is now described with reference to the annexed drawings, wherein like numerals refer to like elements throughout. It should be understood, however, that the drawings and detailed description thereto are not intended to limit the invention to the particular form disclosed. Rather, the intention is to cover all modifications, equivalents, and alternatives falling within the scope of the present invention.

As used in this application, the terms "component" and "system".are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

Furthermore, the present invention may be implemented as a method, apparatus, or article of manufacture using standard programming and/or engineering techniques to produce software, firmware, hardware, or any combination thereof. The term "article of manufacture" (or alternatively, "computer program product") as used herein is intended to encompass a computer program accessible from any computer-readable device, carrier, or media. For example, computer readable media can include but is not limited to magnetic storage devices (e.g., hard disk, floppy disk, magnetic strips...), optical disks (*e.g.,* compact disk (CD), digital versatile disk (DVD)...), smart cards, and flash memory devices (e.g., card, stick).

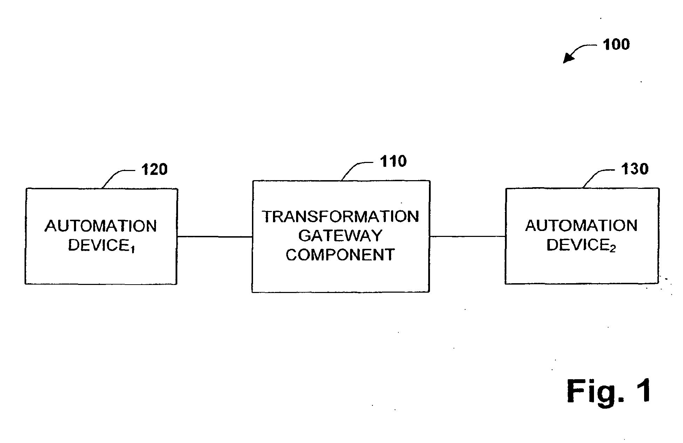

Turning initially to Fig. 1, a data transformation system 100 is depicted in accordance with an aspect of the subject invention. System 100 includes a transformation gateway component 110 and two automation devices 120 and 130. Transformation gateway component 110 (also referred to herein as simply transformation component 110) facilitates communication between automation device 120 (e.g., source device) and automation device 130 (e.g., target device). Automation devices 120 and 130 can include any one of a plurality of industrial processes and machines. For instance, an automation device can be a programmable logic controller (PLC) or an industrial machine under control of the PLC. Industrial machines can include but are not limited to pumps providing fluid transport, fans, conveyor systems, compressors, gearboxes, motion control and detection devices, sensors, screw pumps, and mixers, as well as hydraulic and pneumatic machines driven by motors. Such motors can be combined with other components, such as valves, pumps, furnaces, heaters, chillers, conveyor rollers, fans, compressors, gearboxes, and the like, as well as with appropriate motor drives to form industrial machines and actuators. For example, an electric motor could be combined with a motor drive providing variable electrical power to the motor, as well as with a pump, whereby the motor rotates the pump shaft to create a controllable pumping system.

Transformation component 110 aids communication and interaction amongst automation devices 120 and 130 that utilize differing data protocols. Automation devices can contain an internal or local data format to efficiently process data in accordance with their primary function. In most instances, different device vendors or manufacturers utilize a proprietary data format, which prohibits easy interaction and interoperability of devices across manufacturers. Moreover, even automation devices made by a single manufacturer or provided by a single vendor can often have differing data protocols. Transformation component 110 facilitates translating between multiple protocols to enable a multitude of automation devices to easily interact without forcing production and storage of customized executable code for each different protocol. Rather than forcing each automation device to house translating code for a myriad of disparate data protocols, the transformation component 110 can act as an intermediary between automation devices 120 and 130, for example. Thus, upon receipt of data from source device 120, the transformation component 110 translates or transforms the data to a target protocol and then transmits the newly formatted data to device 130. As described in detail *infra,* the transformation component 110 can simply transform data to an intermediate format that can be accessed and utilized by a plurality of automation devices.

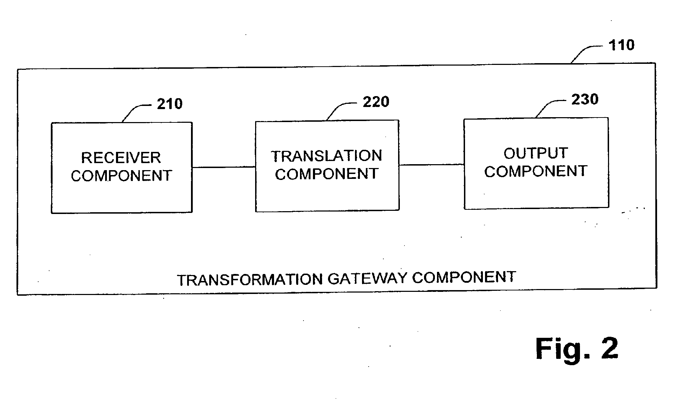

Fig. 2 illustrates a transformation component 110 in accordance with an aspect of the present invention. As shown, transformation component 110 can include a receiver component 210, a translating component 220, and an output component 230. Receiver component 210 receives or retrieves communication data from an automation device and determines the target device and associated protocol. The receiver component then passes the message and any calculated or determined data to the translating component 220. Translating component utilizes such information to produce communications in accordance with the protocol employed by one or more target devices. Such translation can comprise a simple one-to-one protocol mapping and/or other modifications or data transformations (*e.g.,* scaling values, adding signed bit, language translations...). The translated communication can subsequently be passed to the output component 220, which transmits the data to the target device(s) or alternatively makes such data available to be retrieved.

Turning back to Fig. 1, automation device communications or data can be marked-up or schematized to aid in translation. In particular, metadata can be associated with data to describe information format and relations (*e.g*., hierarchical structure). The transformation component 110 can then utilize the provided metadata to facilitate data translation. The translated data or communication can be produced utilizing markups associated with the target device. In accordance with an aspect of the invention, ASCII text scripts can be employed by the transformation component 110 to perform translation. For example, text scripts can utilize the schematized source data and translation information to translate data to a particular format or protocol employed by one or more target devices. Furthermore, it should be appreciated that technologies such as XML (extensible Markup Language), XSL (extensible Stylesheet Language), and XSLT (eXtensible Stylesheet Language Transform) as well as their respective execution subsystems (*e.g*., XSLT processor) can be utilized to facilitate translation. For example, a device's data can be schematized with an appropriate markup. Translation information specifying a particular protocol can be retrieved or provided in an XSL stylesheet. The XSL stylesheet can be specified and written as a general set of rules that map an input domain to an expected output domain. Subsequently, XSLT can perform language transformations utilizing an XSLT processor, for example. Thus, the transformation gateway component 110 can utilize XML, XSL, and XSLT to transform from one protocol to another. It should also be noted that the transformation component 110 can enable two disparate control platforms to communicate using relative or local data tags.

It should be noted that for purposes of clarity and understanding the present invention has been described principally in terms of two devices - a target and a receiver. However, the scope of the invention should not be construed to be so narrow. It should be appreciated that the subject invention also contemplates at least one-to-many and many-to-one communication. For example, an automation device can present a message or communication to the transformation gateway component 110 that is to be distributed to many other devices. Additionally or alternatively, many automation devices can utilize the transformation gateway component 110 to aggregate and/or report out information to a single device.

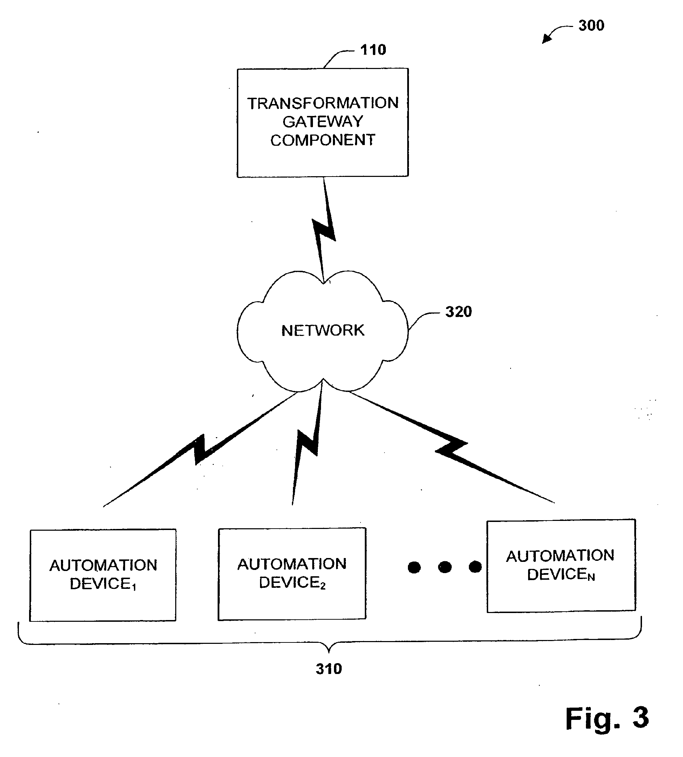

Fig. 3 depicts a data transformation system 300 in accordance with an aspect of the subject invention. Transformation system 300 comprises a plurality of automation devices 310 (AUTOMATION DEVICE₁ through AUTOMATION DEVICE_{N}, where N is an integer greater than or equal to one), network 320, and transformation component 110. One or more automation devices 310 can seek to communicate or otherwise read data from one or more other automation devices. As discussed *supra*, problems can prevent such communications when automation devices 310 utilize different data protocols. To solve these communications problems transformation component 110 can be employed. Transformation component 110 can receive data from a first device formatted according to a first protocol and translate the information into a common middle protocol (*e.g.,* an XML document) which can be provided/made available and understood by other devices employing various disparate data protocols. As illustrated here, transformation component 110 can be employed as a network service accessible by a plurality of automation devices 310. Hence, data to be communicated to at least one other automation device can be transmitted *via* a communications link to a network 320 and then to transformation component 110 which can translate the data and make it accessible to one or more target automation devices 310. The target automation devices 310 can then utilize such data as if it was received/retrieved from a device using the same data format or protocol.

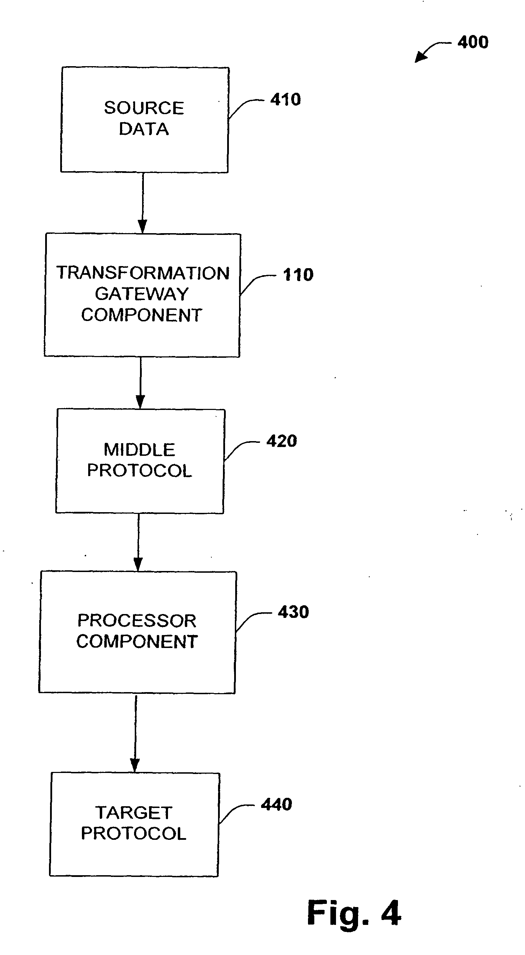

Fig. 4 illustrates a data transformation system 400. According to one aspect of the invention, a middle or intermediate format or protocol can be employed to facilitate data transformation. Transformation component 110 receives source data 410 from an automation device. This source data can be schematized or marked up to describe the structure and nature of particular data. For example, the source data can be an XML document. The transformation component can then generate the middle or intermediate protocol data 420, which can also be an XML document. Processor component 430 can receive or retrieve the middle protocol data 420 and translate such data into a target protocol 440 associated with a particular automation device(s). According to one particular aspect of the subject invention, the processor component 430 can be an XSLT processor that can translate the middle protocol XML document to the format used by the target or receiving device(s). Thus, there are actually two translations one from source data 410 to middle protocol data 420 and another from middle protocol data 420 to target protocol 440. It should be appreciated that although noted as two separate translations executed by the transformation component 110 and the processor component 420, both translations could be executed by transformation component 110. Alternatively, some devices could employ the middle protocol internally thereby relieving the need for two translations.

Turning back to Fig. 3, it should be noted and appreciated that network 320 encompasses communication networks such as local area networks (LANs), metropolitan area networks (MANs), or wide area networks (WANs). LANs are peer-to-peer networks that are optimized for moderated size geographic area which enable communications between networked devices *via* a single physical medium. LANs are normally owned and used by a single individual or organization. MANs are networks that are optimized for geographical areas larger than those covered by a LAN but smaller than those covered by a WAN. In particular, a MAN provides a means of communications ranging from several blocks (*e*.*g*. a university campus) to an entire city. MANs may be owned and operated by a single individual or organization, but are generally utilized by many different individuals and organizations. WANs are communication networks that span a large geographic area (*e.g.,* nationwide, worldwide) and generally consist of the several interconnected LANs and MANs. The largest known WAN known today is the Internet. LAN technologies include Fiber Distributed Data Interface (FDDI), Copper Distributed Data Interface (CDDI), Ethernet/IEEE 1102.3, Token Ring/IEEE 1102.5, physical connection topologies such as bus, tree, ring, and star, and the like. WAN technologies include, but are not limited to, point-to-point links, circuit-switching networks like Integrated Services Digital Networks (ISDN) and variations thereon, packet switching networks, T1 networks, and Digital Subscriber Lines (DSL).

It should be noted and appreciated that the communication links between the automation devices 310 and the network 320 can be either wired, wireless or any combination thereof. For instance, the devices 310 and network 320 can be connected *via* twisted pair, coaxial cable, optical fiber, or power lines. Additionally or alternatively, devices 310 can communicate with network 320 utilizing IEEE 802.11a or IEEE 802.11b standards, Bluetooth technology, and satellite, for example.

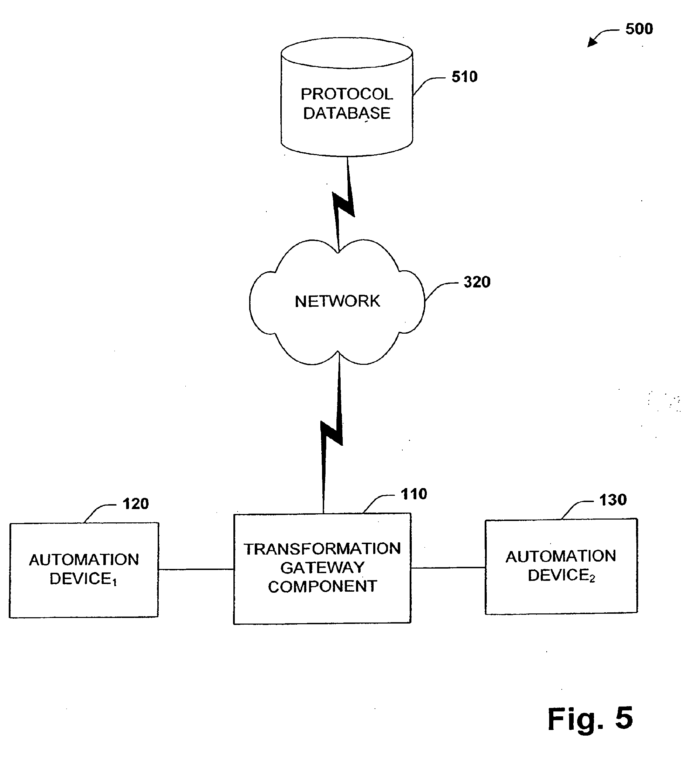

Fig. 5 illustrates another data transformation system 500 in accordance with an aspect of the present invention. Although the transformation component 110, can be embodied in a network service (as described previously) it can also be part of a separate gateway apparatus. System 500 depicts an exemplary implementation of a transformation component embodied within a gateway apparatus. System 500 comprises transformation gateway component 110, two automation devices 120 and 130, as well as a network 320, and a protocol database 510. In this system, automation device 120 and automation device 130 desire to exchange information, but operate using distinct data protocols. Hence, transformation component 110 is employed to facilitate translation there between. Transformation component 110 receives or retrieves data from device 120. In accordance with an aspect of the invention, it can be an XML document. Of course, it should be appreciated that data transmission is not limited to the XML format. In fact, the transmission can include any type of binary data. If an XML document is employed, however, the document can then be converted to proper format and order for the target device 130. For example, an extensible stylesheet language transformation can be applied to translate a source XML document into a target document. In particular, a stylesheet can be applied to a source XML document to produce the target. A stylesheet describes the format of the target device. If the transformation component does not have the stylesheet for a particular communication protocol, it can be retrieved from a protocol database 510 *via* network 320. Protocol database 320 contains stylesheets or other formatting files or information. The network 320 can be a LAN, MAN, or WAN. Connection to the network 320 can be either via wire (*e.g*., twisted pair, coaxial cable, optical fiber, power line) or wirelessly (*e.g*., using IEEE 802.11a and/or IEEE 802.11b standards, Bluetooth technology, satellite). By providing stylesheets or translation information in a central location, a gateway apparatus can easily download information necessary for transforming data This provides a hook that enables any device to communicate with any yet to be determined protocol.

It should be appreciated that although the subject invention has been described in terms of a network service or separate apparatus the functionality of a transformation gateway component can be integrated into automation devices themselves. For example, the devices could download formatting information and execute the translation to an alternative protocol without aid from another apparatus or service.

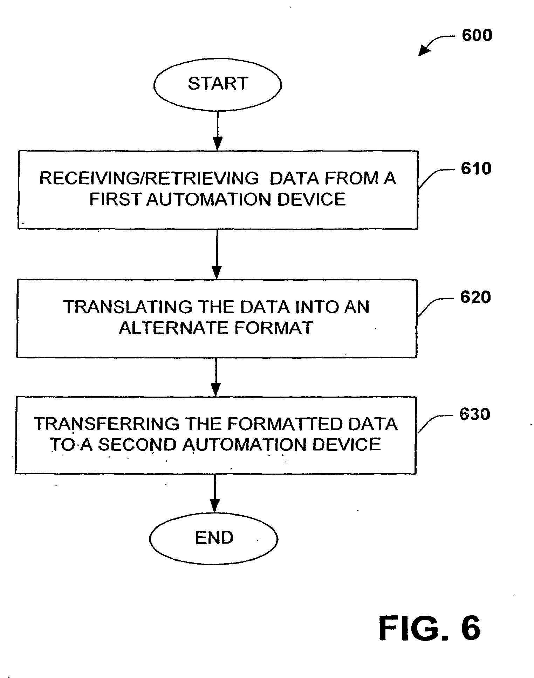

In view of the exemplary systems described *supra*, a methodology that may be implemented in accordance with the present invention will be better appreciated with reference to the flow charts of Figs 6-8. While for purposes of simplicity of explanation, the methodology is shown and described as a series of blocks, it is to be understood and appreciated that the present invention is not limited by the order of the blocks, as some blocks may, in accordance with the present invention, occur in different orders and/or concurrently with other blocks from what is depicted and described herein. Moreover, not all illustrated blocks may be required to implement the methodology in accordance with the present invention.

Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, carrier, or media.

Turning to Fig. 6, a data transformation methodology 600 is illustrated in accordance with an aspect of the present invention. At 610, data is received or retrieved from an automation device. According to an aspect of the invention, the data can be schematized or marked-up with metadata to describe, among other things, relationships between data. For example, the device data can be specified as an XML document. At 620, the received data is translated into an alternate format. Translation can consist of applying a format or template associated with the protocol of a target device. For instance, a stylesheet associated with a target device can be applied by an XSLT processor to produce appropriately formatted and structured data. Finally, at 630, the translated or formatted data can be transferred or outputted to a second target device.

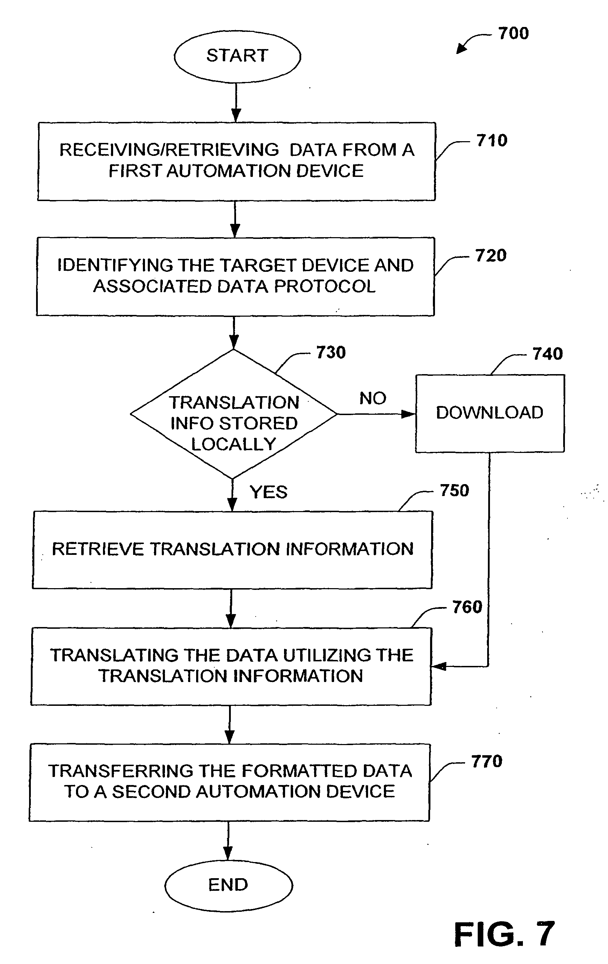

Fig. 7 illustrates a method of transformation data 700 in accordance with an aspect of the subject invention. At 710, data is received or retrieved from a first source automation device. The data can be formatted as an XML document, for example. At 720, the target device and associated communication protocol is determined. At 730, a determination is made as to whether translation information is stored locally. Translation information specifies the format of the output to a second target device. In accordance with an aspect of the invention, such translation information can be embodied in an XSL stylesheet. If the information is not local, then at 740 it can be downloaded, for instance, from a network database located proximate or remote from the source and target automation devices. Thereafter, the method can proceed at 760. If translation information is local, then it is simply retrieved at 750. At 760, the translation information is applied to the received data to translate the data into a format in accordance with the target device's communication protocol. For instance, an XSLT processor can be employed to generate an appropriate document from the source XML document and the stylesheet. At 770, the translated data is transferred or retrieved by one or more target automation devices for further processing.

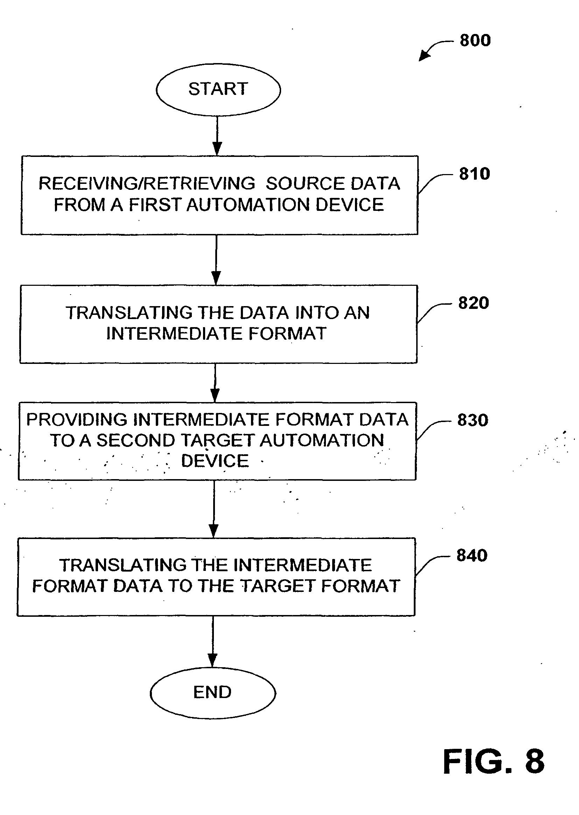

Fig. 8 depicts yet another data transformation methodology in accordance with an aspect of the subject invention. At 810, source data is received from a first automation device. The source data can be schematized and formatted as an XML document. The source data is then translated or transformed into a middle or intermediate data protocol at 820. This middle data format or protocol is then provided to one or more target devices at 830. For example, such data can be made available for download over a network connection. Finally, at 840, the middle data protocol is translated into the target format or protocol utilized by a particular device. For example, a device needing to access data provide by a first automation device can access the data provided in an intermediate format and then translate that to the particular format utilized by such a device for use and/or manipulation.

What has been described above includes examples of the present invention. It is, of course, not possible to describe every conceivable combination of components or methodologies for purposes of descnbing the present invention, but one of ordinary skill in the art may recognize that many further combinations and permutations of the present invention are possible. Accordingly, the present invention is intended to embrace all such alterations, modifications and variations that fall within the scope of the appended Claims. Furthermore, to the extent that the term "includes" is used in either the detailed description or the claims, such term is intended to be inclusive in a manner similar to the term "comprising" as "comprising" is interpreted when employed as a transitional word in a claim.

In summary the invention discloses a system and method of facilitating communication and interaction amongst automation devices that employ disparate data protocols. In particular, an extensible transformation gateway component is employed to provide translations and also act as a middle protocol amongst a plurality of automation devices. Although the transformation component can be integrated into gateway device or apparatus, the transformation component can also be employed as a network service thereby increasing the scalability of the system.

## Claims

1. A method for information exchange in an automation system comprising a plurality of automation devices (310), the plurality of automation devices employing disparate data protocols, the method comprising:
receiving (810) at a transformation component (110), from a first automation device (120) of the plurality of automation devices, source data (410) in conformance with a source data protocol associated with the first automation device;
translating (820), at the transformation component, the source data to an intermediate data protocol (420);
determining, at the transformation component, a second automation device (130) of the plurality of automation devices as a target device and a data protocol associated with the second automation device (130) as a target data protocol;
obtaining, at the transformation component, translation information specifying a format in accordance with the target data protocol;
applying, at the transformation component, the obtained translation information to the received data in the intermediate protocol to translate the data into the target protocol (440) utilized by the second automation device; and
transferring (830), from the transformation component, the translated data in the target data protocol to the second automation device (130).

2. The method of claim 1, wherein obtaining the translation information comprises determining whether the translation information is stored locally; and downloading the translation information from a network database, when it is determined that the translation information is not stored locally.

3. The method of claim 1 or 2, wherein the source data (410) is schematized and formatted as an XML document.

4. The method of one of claims 1 to 3, wherein translating the source data protocol into the intermediate data protocol (420) comprises employing XSLT.

5. The method of one of claims 1 to 4, wherein providing (830) the translated data to at least a second automation device (130) comprises making the translated data available for download over a network (320) connection.

6. The method of one of claims 1 to 5, wherein translating the source data (410) to an intermediate data protocol (420) comprises generating an XML document in accordance with a stylesheet specifying details of the intermediate data protocol.

7. The method of claim 6, wherein the stylesheet is retrieved from a network database (510).

8. The method of one of claims 1 to 7, wherein the transformation component (110) can be employed as a network (320) service accessible by the plurality of automation devices (310).

9. The method of one of claims 1 to 8, wherein each of the plurality of automation devices (310) is a programmable logic controller, PLC, or an industrial machine under control of a PLC.

10. The method of one of claims 1 to 9, wherein the step of receiving (830) comprises downloading the data over a network (320) connection.

11. The method of one of claims 1 to 10, wherein the translation information is a stylesheet specifying the structure and format of the target protocol.

12. The method of one of claims 1 to 11, wherein the first automation device (120) and the second automation device (130) reside on disparate control platforms.

13. A computer readable medium having stored thereon computer executable instructions for carrying out the method of one of claims 1 to 12.

14. An extensible data transformation system for use with an industrial control system comprising a plurality of automation devices (320), the plurality of automation devices employing disparate data protocols, comprising:
a transformation component (110) adapted to receive (810) source data (410) from at least a first automation device (120) of the plurality of automation devices in conformance with a source data protocol associated with the first automation device (120), to translate the source data to an intermediate data protocol (420), to determine a second automation device (130) of the plurality of automation devices as a target device and a data protocol associated with the second automation device (130) as a target data protocol, to obtain translation information specifying a format in accordance with the target data protocol, and to apply the obtained translation information to the received data in the intermediate protocol to translate the data into the target protocol (440) utilized by the second automation device; and
means for transferring (830), from the transformation component, the translated data in the target data protocol to the second automation device (130).

15. The system of claim 14, wherein the transformation component (110) is further adapted to determine whether the translation information is stored locally, and to download the translation information from a network database, when it is determined that the translation information is not stored locally.

16. The system of claim 14 or 15, wherein the source data (410) is schematized and formatted as an XML document.

17. The system of one of claims 14 to 16, wherein the transformation component (110) is further adapted to employ XSLT for translating the source data protocol into the intermediate data protocol (420).

18. The system of one of claims 14 to 17, wherein the transformation component (110) is further adapted to make the translated data available for download over a network (320) connection.

19. The system of one of claims 14 to 18, wherein translating the source data (410) to an intermediate data protocol (420) comprises generating an XML document in accordance with a stylesheet specifying details of the intermediate data protocol.

20. The system of claim 19, wherein the transformation component (110) is further adapted to retrieve the stylesheet from a network database (510).

21. The system of one of claims 14 to 20, wherein the transformation component (110) is further adapted to be employed as a network (320) service accessible by the plurality of automation devices (310).

22. The system of one of claims 14 to 21, wherein each of the plurality of automation devices (310) is a programmable logic controller, PLC, or an industrial machine under control of a PLC.

23. The system of one of claims 14 to 22, wherein the transformation component (110) is further adapted to download the source data over a network connection (320).

24. The system of one of claims 14 to 23, wherein the translation information is a stylesheet specifying the structure and format of the target protocol.

25. The system of one of claims 14 to 24, wherein the first automation device (120) and the second automation device (130) reside on disparate control platforms.

## Patentansprüche

1. Verfahren für einen Informationsaustausch in einem Automatisierungssystem mit einer Vielzahl von Automatisierungsgeräten (310), wobei die Vielzahl der Automatisierungsgeräte unterschiedliche Datenprotokolle verwenden, mit den Schritten:
Empfangen (810) von Quelldaten (410) an einer Transformationskomponente (110) von einem ersten Automatisierungsgerät (120) der Vielzahl der Automatisierungsgeräte in Übereinstimmung mit einem Quelldatenprotokoll, das mit dem ersten Automatisierungsgerät verknüpft ist;
Übersetzen (820) der Quelldaten in ein intermediäres Datenprotokoll (420) an der Transformationskomponente;
Ermitteln, an der Transformationskomponente, eines zweiten Automatisierungsgerätes (130) der Vielzahl der Automatisierungsgeräte als Zielgerät und eines Datenprotokolls, das mit dem zweiten Automatisierungsgerät (130) verknüpft ist, als Zieldatenprotokoll;
Erhalten, an der Transformationskomponente, von Übersetzungsinformationen, die ein Format in Übereinstimmung mit Zieldatenprotokoll spezifizieren;
Anwenden, an der Transformationskomponente, der erhaltenen Übersetzungsinformationen auf die empfangenen Daten in dem intermediären Protokoll, um die Daten in das Zielprotokoll (440) zu übersetzen, das durch das zweite Automatisierungsgerät verwendet wird; und
Transferieren (830) der übersetzten Daten in dem Zieldatenprotokoll von der Transformationskomponente an das zweite Automatisierungsgerät (130).

2. Verfahren nach Anspruch 1, wobei das Erhalten der Übersetzungsinformationen eine Feststellung umfasst, ob die Übersetzungsinformationen lokal gespeichert sind; und ein Herunterladen der Übersetzungsinformationen von einer Netzwerkdatenbank, wenn festgestellt wird, dass die Übersetzungsinformationen nicht lokal gespeichert sind.

3. Verfahren nach Anspruch 1 oder 2, wobei die Quelldaten (410) schematisiert sind und als XML-Dokument formatiert sind.

4. Verfahren nach einem der Ansprüche 1 bis 3, wobei das Übersetzen des Quelldatenprotokolls in das intermediäre Datenprotokoll (420) die Verwendung von XLST umfasst.

5. Verfahren nach einem der Ansprüche 1 bis 4, wobei das zur Verfügungstellen (830) der übersetzten Daten an zumindest ein zweites Automatisierungsgerät (130) eine zur Verfügungstellung der übersetzten Daten für das Herunterladen über eine Netzwerkverbindung (320) umfasst.

6. Verfahren nach einem der Ansprüche 1 bis 5, wobei das Übersetzen der Quelldaten (410) in ein intermediäres Datenprotokoll (420) eine Erzeugung eines XML-Dokuments in Übereinstimmung mit einer Formatvorlage, die Einzelheiten des intermediären Datenprotokolls angibt, umfasst.

7. Verfahren nach Anspruch 6, wobei die Formatvorlage aus einer Netzwerkdatenbank (510) abgerufen wird.

8. Verfahren nach einem der Ansprüche 1 bis 7, wobei die Transformationskomponente (110) als Netzwerkservice (320) verwendet werden kann, auf den die Vielzahl der Automatisierungsgeräte (310) zugreifen kann.

9. Verfahren nach einem der Ansprüche 1 bis 8, wobei jedes der Vielzahl der Automatisierungsgeräte (310) ein programmierbarer Logikkontroller, PLC, oder eine Industriemaschine unter Steuerung einer PLC ist.

10. Verfahren nach einem der Ansprüche 1 bis 9, wobei der Empfangsschritt (830) ein Herunterladen der Daten über eine Netzwerkverbindung (320) umfasst.

11. Verfahren nach einem der Ansprüche 1 bis 10, wobei die Übersetzungsinformationen eine Formatvorlage sind, die die Struktur und das Format des Zielprotokolls spezifiziert.

12. Verfahren nach einem der Ansprüche 1 bis 11, wobei das erste Automatisierungsgerät (120) und das zweite Automatisierungsgerät (130) auf unterschiedlichen Steuerplattformen sitzen.

13. Computerlesbares Medium, auf dem computerausführbare Anweisungen gespeichert sind, um das Verfahren nach einem der Ansprüche 1 bis 12 auszuführen.

14. Erweiterbares Datentransformationssystem zur Verwendung mit einem industriellen Steuersystem, das eine Vielzahl von Automatisierungsgeräten (320) umfasst, wobei die Vielzahl der Automatisierungsgeräte unterschiedliche Datenprotokolle verwenden, umfassend:
eine Transformationskomponente (110), die dazu eingerichtet ist, Quelldaten (410) von zumindest einem ersten Automatisierungsgerät (120) der Vielzahl der Automatisierungsgeräte in Übereinstimmung mit einem Quelldatenprotokoll, das mit dem ersten Automatisierungsgerät (120) verknüpft ist, zu empfangen, die Quelldaten in ein intermediäres Datenprotokoll (420) zu übersetzen, ein zweites Automatisierungsgerät (130) der Vielzahl der Automatisierungsgeräte als Zielgerät und ein Datenprotokoll, das mit dem zweiten Automatisierungsgerät (130) verknüpft ist, als Zieldatenprotokoll zu bestimmen, Übersetzungsinformationen, die ein Format in Übereinstimmung mit dem Zieldatenprotokoll spezifieren, zu erhalten, und die erhaltenen Übersetzungsinformationen auf die empfangenen Daten in dem intermediären Protokoll anzuwenden, um die Daten in das Zielprotokoll (440) zu übersetzen, das durch das zweite Automatisierungsgerät verwendet wird; und
Mittel zur Transferierung (830) der übersetzten Daten in dem Zieldatenprotokoll von der Transformationskomponente an das zweite Automatisierungsgerät (130).

15. System nach Anspruch 14, wobei die Transformationskomponente (110) des Weiteren dazu eingerichtet ist, festzustellen, ob die Übersetzungsinformationen lokal gespeichert sind, und die Übersetzungsinformationen von einer Netzwerkdatenbank herunterzuladen, wenn festgestellt wird, dass die Übersetzungsinformationen nicht lokal gespeichert sind.

16. System nach Anspruch 14 oder 15, wobei die Quelldaten (410) schematisiert und als XML-Dokument formatiert sind.

17. System nach einem der Ansprüche 14 bis 16, wobei die Transformationskomponente (110) des Weiteren dazu eingerichtet ist, XSLT für die Übersetzung des Quelldatenprotokolls in das intermediäre Datenprotokoll (420) zu verwenden.

18. System nach einem der Ansprüche 14 bis 17, wobei die Transformationskomponente (110) des Weiteren dazu eingerichtet ist, die übersetzten Daten für das Herunterladen über eine Netzwerkverbindung (320) zur Verfügung zu stellen.

19. System nach einem der Ansprüche 14 bis 18, wobei das Übersetzen der Quelldaten (410) in ein intermediäres Datenprotokoll (420) die Erzeugung eines XML-Dokuments in Übereinstimmung mit einer Formatvorlage umfasst, die Details des intermediären Datenprotokolls spezifiziert.

20. System nach Anspruch 19, wobei die Transformationskomponente (110) des Weiteren dazu eingerichtet ist, die Formatvorlage aus einer Netzwerkdatenbank (510) abzurufen.

21. System nach einem der Ansprüche 14 bis 20, wobei die Transformationskomponente (110) des Weiteren dazu eingerichtet ist, als Netzwerkservice (320) verwendet zu werden, auf den die Vielzahl der Automatisierungsgeräte (310) zugreifen kann.

22. System nach einem der Ansprüche 14 bis 21, wobei jedes der Vielzahl der Automatisierungsgeräte (310) ein programmierbarer Logikkontroller, PLC, oder eine Industriemaschine unter Steuerung einer PLC ist.

23. System nach einem der Ansprüche 14 bis 22, wobei die Transformationskomponente (110) des Weiteren dazu eingerichtet ist, die Quelldaten über eine Netzwerkverbindung (320) herunterzuladen.

24. System nach einem der Ansprüche 14 bis 23, wobei die Übersetzungsinformationen eine Formatvorlage sind, die die Struktur und das Format des Zielprotokolls spezifiziert.

25. System nach einem der Ansprüche 14 bis 24, wobei das erste Automatisierungsgerät (120) und das zweite Automatisierungsgerät (130) auf unterschiedlichen Steuerplattformen sitzen.

## Revendications

1. Procédé d'échange d'informations dans un système d'automatisation comprenant une pluralité de dispositifs d'automatisation (310), la pluralité de dispositifs d'automatisation utilisant des protocoles de données disparates, le procédé comprenant :
la réception (810), au niveau d'un composant de transformation (110), depuis un premier dispositif d'automatisation (120) de la pluralité de dispositifs d'automatisation, de données source (410) en conformité avec un protocole de données source associé au premier dispositif d'automatisation ;
au niveau du composant de transformation, la traduction (820) des données source dans un protocole de données intermédiaire (420) ;
au niveau du composant de transformation, la détermination d'un deuxième dispositif d'automatisation (130) de la pluralité de dispositifs d'automatisation en tant que dispositif cible et protocole de données associé au deuxième dispositif d'automatisation (130) en tant que protocole de données cible ;
au niveau du composant de transformation, l'obtention d'informations de traduction spécifiant un format en conformité avec le protocole de données cible ;
au niveau du composant de transformation, l'application des informations de traduction obtenues aux données reçues dans le protocole intermédiaire pour traduire les données dans le protocole cible (440) utilisé par le deuxième dispositif d'automatisation ; et
le transfert (830), depuis le composant de transformation, des données traduites dans le protocole de données cible vers le deuxième dispositif d'automatisation (130).

2. Procédé selon la revendication 1, dans lequel l'obtention des informations de traduction comprend la détermination du fait que les informations de traduction sont mémorisées localement ; et le téléchargement des informations de traduction depuis une base de données de réseau, lorsqu'on a déterminé que les informations de traduction ne sont pas mémorisées localement.

3. Procédé selon la revendication 1 ou 2, dans lequel les données source (410) sont schématisées et formatées en tant que document XML.

4. Procédé selon l'une des revendications 1 à 3, dans lequel la traduction du protocole de données source dans le protocole de données intermédiaire (420) comprend l'utilisation de XSLT.

5. Procédé selon l'une des revendications 1 à 4, dans lequel la fourniture (830) des données traduites au moins à un deuxième dispositif d'automatisation (130) comprend la mise à disposition des données traduites pour téléchargement sur une connexion de réseau (320).

6. Procédé selon l'une des revendications 1 à 5, dans lequel la traduction des données source (410) dans le protocole de données intermédiaire (420) comprend la génération d'un document XML en fonction des détails de spécification d'une feuille de style du protocole de données intermédiaire.

7. Procédé selon la revendication 6, dans lequel la feuille de style est extraite d'une base de données de réseau (510).

8. Procédé selon l'une des revendications 1 à 7, dans lequel le composant de transformation (110) peut être utilisé en tant que service de réseau (320) accessible par la pluralité de dispositifs d'automatisation (310).

9. Procédé selon l'une des revendications 1 à 8, dans lequel chaque dispositif de la pluralité de dispositifs d'automatisation (310) est un contrôleur logique programmable, PLC, ou une machine industrielle sous contrôle d'un PLC.

10. Procédé selon l'une des revendications 1 à 9, dans lequel l'étape de réception (830) comprend le téléchargement des données sur une connexion de réseau (320).

11. Procédé selon l'une des revendications 1 à 10, dans lequel les informations de traduction sont constituées d'une feuille de style spécifiant la structure et le format du protocole cible.

12. Procédé selon l'une des revendications 1 à 11, dans lequel le premier dispositif d'automatisation (120) et le deuxième dispositif d'automatisation (130) résident sur des plates-formes de commande disparates.

13. Support lisible par un ordinateur sur lequel sont enregistrées des instructions exécutables par un ordinateur pour effectuer le procédé selon l'une des revendications 1 à 12.

14. Système de transformation de données extensible destiné à être utilisé avec un système de commande industriel comprenant une pluralité de dispositifs d'automatisation (320), la pluralité de dispositifs d'automatisation utilisant des protocoles de données disparates, comprenant :
un composant de transformation (110) adapté à recevoir (810) des données source (410) depuis au moins un premier dispositif d'automatisation (120) de la pluralité de dispositifs d'automatisation, en conformité avec un protocole de données source associé au premier dispositif d'automatisation (120), à traduire les données source dans un protocole de données intermédiaire (420), à déterminer un deuxième dispositif d'automatisation (130) de la pluralité de dispositifs d'automatisation en tant que dispositif cible et un protocole de données associé au deuxième dispositif d'automatisation (130) en tant que protocole de données cible, à obtenir des informations de traduction spécifiant un format en conformité avec le protocole de données cible, et à appliquer les informations de traduction obtenues aux données reçues dans le protocole intermédiaire pour traduire les données dans le protocole cible (440) utilisé par le deuxième dispositif d'automatisation ; et
un moyen pour transférer (830), depuis le composant de transformation, les données traduites dans le protocole de données cible vers le deuxième dispositif d'automatisation (130).

15. Système selon la revendication 14, dans lequel le composant de transformation (110) est adapté en outre à déterminer si les informations de traduction sont mémorisées localement ; et à télécharger les informations de traduction depuis une base de données de réseau, lorsqu'on a déterminé que les informations de traduction ne sont pas mémorisées localement.

16. Système selon la revendication 14 ou 15, dans lequel les données source (410) sont schématisées et formatées en tant que document XML.

17. Système selon l'une des revendications 14 à 16, dans lequel le composant de transformation (110) est adapté en outre à utiliser XSLT pour traduire le protocole de données source dans le protocole de données intermédiaire (420).

18. Système selon l'une des revendications 14 à 17, dans lequel le composant de transformation (110) est adapté en outre à mettre à disposition les données traduites pour téléchargement sur une connexion de réseau (320).

19. Système selon l'une des revendications 14 à 18, dans lequel la traduction des données source (410) dans un protocole de données intermédiaire (420) comprend la génération d'un document XML en fonction des détails de spécification d'une feuille de style du protocole de données intermédiaire.

20. Système selon la revendication 19, dans lequel le composant de transformation (110) est adapté en outre à récupérer la feuille de style dans une base de données de réseau (510).

21. Système selon l'une des revendications 14 à 20, dans lequel le composant de transformation (110) est adapté en outre à être utilisé en tant que service de réseau (320) accessible par la pluralité de dispositifs d'automatisation (310).

22. Système selon l'une des revendications 14 à 21, dans lequel chaque dispositif de la pluralité de dispositifs d'automatisation (310) est un contrôleur logique programmable, PLC, ou une machine industrielle sous le contrôle d'un PLC.

23. Système selon l'une des revendications 14 à 22, dans lequel le composant de transformation (110) est adapté en outre à télécharger les données source sur une connexion de réseau (320).

24. Système selon l'une des revendications 14 à 23, dans lequel les informations de traduction sont constituées d'une feuille de style spécifiant la structure et le format du protocole cible.

25. Système selon l'une des revendications 14 à 24, dans lequel le premier dispositif d'automatisation (120) et le deuxième dispositif d'automatisation (130) résident sur des plates-formes de commande disparates.
